(19) Europäisches Patentamt
European Patent Office
Office européen des brevets

(11) EP 0 790 116 A2

(12) EUROPÄISCHE PATENTANMELDUNG

(43) Veröffentlichungstag:
20.08.1997 Patentblatt 1997/34

(51) Int. Cl.⁶: **B29C 45/16**, B29C 45/27

(21) Anmeldenummer: 97100213.4

(22) Anmeldetag: 09.01.1997

(84) Benannte Vertragsstaaten:
AT BE CH DE IT LI LU NL

(30) Priorität: 19.02.1996 DE 19606045

(71) Anmelder: **Fried. Krupp AG Hoesch-Krupp
45143 Essen (DE)**

(72) Erfinder:
• **Blank, Michael, Dipl.-Ing.
42113 Wuppertal (DE)**
• **Schramm, Klaus, Prof. Dr. Ing.
45131 Essen (DE)**

(54) **Verfahren zum Spritzgiessen von dreischichtigen Spritzlingen und Vorrichtung für die Durchführung des Verfahrens**

(57) Bei einem Verfahren zum Spritzgießen von dreischichtigen Spritzlingen, insbesondere von Flaschenvorformlingen mit einer inneren und einer äußeren Schicht aus PET (Polyethylenterephthalat) und einer mittleren Schicht aus PET-Rezyklat, mittels eines Formwerkzeugs mit mehreren Formkavitäten erfolgt die Zuführung der Werkstoffe für die Bildung der inneren und der äußeren Schicht (Komponente A) einerseits und für die Bildung der mittleren Schicht (Komponente B) andererseits durch separat beheizbare Schmelzekanäle, deren Temperatur unabhängig voneinander regelbar ist. Der Schmelzefluß der beiden Komponeneten A und B wird jeweils über gleichlange Wege geführt, wobei der Schmelzefluß der beiden Komponenten A und B in den Spritzgießdüsen derart geführt wird, daß sich ein gleicher Fießfrontverlauf ergibt.

29 28 27 26 25 24 23 16 17 20 19 21

22a
22b
11.1
11
10
10.1

35 Fig. 2 34 33 32 31 13 12 15 14 30

EP 0 790 116 A2

## Beschreibung

Die Erfindung betrifft ein Verfahren zum Spritzgießen von dreischichtigen Spritzlingen, insbesondere von Flaschenvorformlingen mit einer inneren und einer äußeren Schicht aus PET (Polyethylenterephthalat) und einer mittleren Schicht aus PET-Rezyklat, mittels eines Formwerkzeugs mit mehreren Formkavitäten.

Die Erfindung ist weder auf Flaschenvorformlinge noch auf den Werkstoff PET beschränkt. Sie ist auch anwendbar beim Spritzgießen von Spritzlingen für beliebige andere Zwecke aus beliebigen anderen Kunststoffen bzw. Kunststoffkombinationen. Beispielsweise kann die Erfindung auch beim Spritzgießen von Mehrschichtvorformlingen aus der Werkstoffkombination PET und PEN (Polyethylennaphtalat) Verwendung finden. Polyethylennaphtalat gehört - wie PET - zu der Werkstoffgruppe der Polyester, weist jedoch gegenüber PET weitaus bessere thermische Beanspruchungseigenschaften, allgemeine mechanische Eigenschaften sowie Barriereeigenschaften auf. Dieser noch verhältnismäßig neue Werkstoff ist u. a. jedoch bereits als Verpackungsmaterial in der Lebensmittelbranche von den jeweiligen staatlichen Institutionen freigegeben und aufgrund seiner hervorragenden Eigenschaften geeignet, schon bei verhältnismäßig kleinen Anteilen von 10 % bis 25 % am Gewicht des Vorformlings die Flaschenqualität deutlich zu erhöhen. Flaschen aus PET/PEN eignen sich beispielsweise besonders für die Heißabfüllung von Fruchtsäften sowie für den Einsatz in heißen Ländern.

Bei den genannten Vorformlingen bildet die mittlere Schicht - der betreffende Werkstoff wird nachfolgend Komponente B genannt - einen Kern und die innere und die äußere Schicht - der betreffende Werkstoff wird nachfolgend Komponente A genannt - bilden eine geschlossene Haut.

Bei einer bekannten Vorrichtung für die Durchführung des eingangs genannten Verfahrens werden die Schmelzen durch ein Schmelzekanalsysteme zu den Anspritzdüsen geführt, wobei das Schmelzekanalsysteme aus in einem festen Heißläuferblock vorgesehene Bohrungen gebildet ist (EP 0647 514 A1). Dadurch weisen die beiden Komponenten A und B für die Bildung der einzelnen Schichten des Vorformlings stets die gleiche Temperatur auf.

Der Antrieb der Verschlußnadeln der Anspritzdüsen erfolgt bei der bekannten Vorrichtung beispielsweise pneumatisch nach dem Doppelkolbenprinzip mittels zwei in einem gemeinsamen Gehäuse unabhängig voneinander bewegbaren Kolben, die mit unterschiedlichen Drücken beaufschlagt werden. Damit ist ein synchrones Schließen bzw. Öffnen der einzelnen Schmelzezuführungskanäle in den Kavitäten - und somit ein gleichmäßiger Fließfrontverlauf - nicht mit Sicherheit zu erreichen, weil die Druckluft in Abhängigkeit von den einzelnen Schließ- bzw. Öffnungswiderständen kompressibel, d. h. mit Verzögerungen, und damit ungleichförmig reagiert. Dies führt dazu, daß die erforderliche Synchronität aller Kavitäten nicht erreicht wird, so daß die Vorformlinge in den einzelnen Schichten unterschiedliche Anteile der Komponenten A und B aufweisen.

Ein weiterer Nachteil der bekannten Vorrichtung besteht darin, daß es in den Umschaltphasen von der Komponente A auf die Komponente B und umgekehrt zu unkontrolliertem Schmelzefluß bzw. sogar zu nicht erwünschten Schmelzeflußstillständen in den Kavitäten und zur Bildung von Fließlinien an dem Vorformling kommen kann. Dies beruht darauf, daß das Fließen der Materialkomponenten A und B auch von den entsprechenden Einspritzkolben gesteuert wird.

Der Erfindung liegt die Aufgabe zugrunde, die bei der Durchführung des eingangs genannten Verfahrens mit bekannten Vorrichtungen auftretenden Nachteile zu vermeiden und das Verfahren sowie die Vorrichtung so auszugestalten, daß ein gleicher Fließfrontverlauf in jeder Kavität gewährleistet ist und beispielsweise kein Stillstand des Schmelzeflusses auftreten kann. Darüber hinaus soll bei hoher Reproduzierbarkeit der Anteil an Werkstoff der die mittlere Schicht bildenden Komponente B möglichst groß sein.

Die gestellte Aufgabe wird bei dem eingangs genannten Verfahren dadurch gelöst,

-   daß die Zuführung der Werkstoffe für die Bildung der inneren und der äußeren Schicht (Komponente A) einerseits und für die Bildung der mittleren Schicht (Komponente B) andererseits durch separat beheizbare Schmelzekanäle erfolgt, deren Temperatur unabhängig voneinander regelbar ist,
-   daß der Schmelzefluß der beiden Komponeneten A und B jeweils über gleichlange Wege geführt wird
-   und daß der Schmelzefluß in den Spritzgießdüsen derart geführt wird, daß sich ein gleicher Fießfrontverlauf ergibt.

Durch die separate Beheizung und die unabhängige Regelung der Temperatur der Schmelzekanäle wird erreicht, daß trotz unterschiedlichen Wärmeverhaltens der Komponenten A und B infolge unterschiedlicher physikalischer Eigenschaften der Schmelzefluß der beiden Komponenten und der Anteil des Werkstoffs der beiden Komponenten über alle Kavitäten des Spritzgießwerkzeugs sehr genau geregelt werden kann, so daß die Werkstoffverteilung über alle Kavitäten innerhalb eines Spritzgießzyklusses sowie von Zyklus zu Zyklus sehr gleichmäßig ist.

Die Merkmale weiterer Ausgestaltungen des erfindungsgemäßen Verfahrens sind in den Unteransprüchen 2 bis 4 genannt.

Die Vorrichtung für die Durchführung des erfindungsgemäßen Verfahrens, die zwei Plastifiziereinheiten, eine Schmelzezuführungstraverse, einen Heißläuferblock, einen Heißläufer-Düsenkörper und einen Matrizeneinsatz aufweist, löst die gestellte Aufgabe dadurch, daß der Heißläuferblock durch thermisch voneinander isolierte und mit gesonderten Heizeinrichtungen versehene Blockkörper gebildet ist, wobei in jedem Blockkörper ein Schmelzekanal für eine der beiden Komponenten A bzw. B vorgesehen ist.

Die Merkmale weiterer Ausgestaltungen der erfindungsgemäßen Vorrichtung sind in den Unteransprüchen 6 bis 14 genannt.

Gegenstand der Erfindung ist ferner eine hydraulische Einrichtung, die insbesondere für die Betätigung der Verschlußelemente bzw. der sie aufnehmenden Bauteile der erfindungsgemäßen Vorrichtung geeignet, aber auch anderweitig verwendbar ist. Diese hydraulische Einrichtung weist einen Zylinder, eine Kolbenstange und einen mit der Kolbenstange verbundenen Kolben auf, der beiderseits mit Druck beaufschlagbar ist, wobei

- der Zylinder neben dem Innenraum einen weiteren Innenraum aufweist und die Kolbenstange durch die Trennwand zwischen den beiden Innenräumen des Zylinders hindurchgeführt ist,
- in dem weiteren Innenraum ein zweiter Kolben verschiebbar auf der Kolbenstange angeordnet ist, der auf seiner der Trennwand zwischen den beiden Innenräumen des Zylinders zugewandten, mit Druck beaufschlagbaren Seite mit einer Ausdrehung versehen ist, während dessen andere Seite unter einem Gegendruck steht,
- die Kolbenstange mit einer Ringnut versehen ist, die einen trapezförmigen Querschnitt aufweist,
- zwischen der Trennwand des Zylinders und dem weiteren Kolben ein aus Segmenten gebildeter Ring vorgesehen ist, dessen innerer Durchmesser dem Durchmesser an der Grundfläche der Ringnut in der Kolbenstange entspricht und dessen äußerer Durchmesser so bemessen ist, daß der weitere Kolben mit der Innenfläche seiner Ausdrehung darüber hinweggleiten kann, bei der
- der Querschnitt der Segmente symmetrisch und die Kontur an der inneren Begrenzungsfläche des aus den Segmenten gebildeten Ringes dem trapezförmigen Querschnitt der Ringnut in der Kolbenstange angepaßt ist.

Die erfindungsgemäße hydraulische Einrichtung ermöglicht das Verriegeln der Kolbenstange in einer beliebigen Stellung. Im vorliegenden Fall ermöglicht die hydraulische Einrichtung eine Verriegelung der Kolbenstange, wenn sich die Düsenverschlußkörper in der Mittelstellung befinden.

Bei bekannten hydraulischen Einrichtungen der genannten Art ist lediglich ein Verriegeln der Kolbenstange in einer Endstellung möglich.

Bei der Durchführung des erfindungsgemäßen Verfahrens werden die beiden Komponenten A und B von zwei separaten Plastifiziereinheiten mit den Schmelzemengen angepaßten Schneckengrößen aufgeschmolzen und zum Schneckenvorraum gefördert. Dabei wird die Komponente B über ein zwischen Schneckenvorraum und Werkzeug angeordnetes Schmelzefilter geführt, um etwaige Verunreinigungen auszufiltern.

Bei Einfach- oder Mehrfachwerkzeugen wird die jeweilige Kavität in der Weise gefüllt, daß zunächst die Komponente A eingespritzt wird. Danach erfolgt, möglichst ohne Unterbrechung des Fließvorgangs, die Einspritzung der Komponente B. Sodann wird, ebenfalls möglichst ohne Unterbrechung der Fließvorgangs, die Komponente A nachgespritzt bzw., in einer anschließenden Nachdruckphase, nachgedrückt. Das Nachdrücken der Komponente A ist notwendig, um den Spritzdüsenvorraum von Material der Komponente B freizumachen, damit für den folgenden Zyklus reines Material der Komponente A zur Verfügung steht.

Die Erfindung ist anhand der Zeichnung, in der mehrere Ausführungsbeispiele der erfindungsgemäßen Vorrichtung und deren Teile dargestellt sind, näher erläutert. Es zeigen:

Fig. 1 ein Spritzaggregat in Draufsicht;

Fig. 2 ein Formwerkzeug, ebenfalls in Draufsicht, jedoch teilweise im Querschnitt;

Fig. 3 den die Spritzgießdüse enthaltenden Ausschnitt aus dem in Fig. 2 dargestellten Formwerkzeug;

Fig. 4 einen Querschnitt durch die in Fig. 3 dargestellte Spritzgießdüse;

Fig. 5 einen Fließfrontverlauf in Isochorendarstellung;

Fig. 6 den Fließfrontverlauf gemäß Fig. 5 in skalierter Darstellung;

Fig. 7 einen der Fig. 3 entsprechenden Ausschnitt mit einer anders gestalteten Spritzgießdüse;

Fig. 8 einen der Fig. 3 entsprechenden Ausschnitt mit einer zweiten anders gestalteten Spritzgießdüse;

Fig. 9 einen der Fig. 3 entsprechenden Ausschnitt mit einer dritten anders gestalteten Spritzgießdüse;

Fig. 10 einen Ausschnitt aus der Kopfplatte und der Trägerplatte der Vorrichtung in Draufsicht;

Fig. 11 einen Schnitt nach der Linie XI-XI in Fig. 10;

Fig. 12      einen Schnitt nach der Linie XII-XII in Fig. 10;

Fig. 13 bis Fig. 15      ein anderes Ausführungsbeispiel als in den Fig. 10 bis 12 dargestellt;

Fig. 16 bis Fig. 18      ein weiteres Ausführungsbeispiel als in den Fig. 10 bis 12 dargestellt;

Fig. 19      den Formbereich der Vorrichtung im Querschnitt;

Fig. 20      die Einzelheit XX aus Fig. 19;

Fig. 21      einen Speicher mit einer Vakuumpumpe;

Fig. 22      eine hydraulische Einrichtung;

Fig. 23      eine schematische Darstellung des Verlaufs der Schmelzekanäle;

Fig. 24      eine grafische Darstellung der Masseströme über der Zeit.

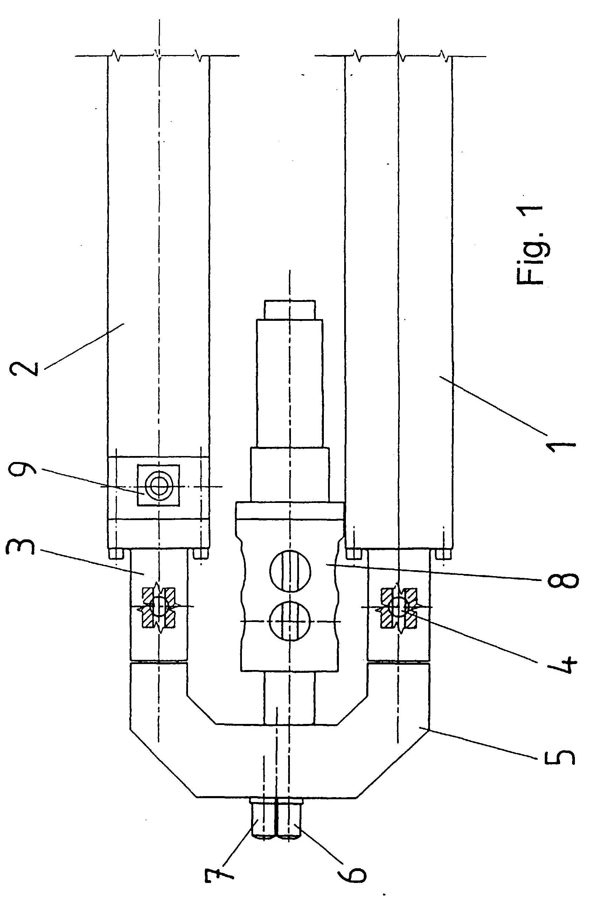

Das in Fig. 1 dargestellte Spritzaggregat weist zwei Plastifiziereinheiten 1 und 2 auf. In der einen Plastifiziereinheit 1 wird die Komponente A und in der anderen Plastifiziereinheiten 2 die Komponente B plastifiziert. Über Zwischenkörper 3, in denen Sperrbolzen 4 vorgesehen sind, und über eine Schmelzetraverse 5 münden die Plastifiziereinheiten 1 und 2 in Maschinendüsen 6 und 7, wobei über die Maschinendüse 6 die Komponente A und über die Maschinendüse 7 die Komponente B geleitet wird. An die Schmelzetraverse 5 ist ein Nachdruckbaustein 8 zum Nachdrücken der Komponente A angebracht. In der Plastifiziereinrichtung 2 ist ein Schmelzefilter 9 vorgesehen.

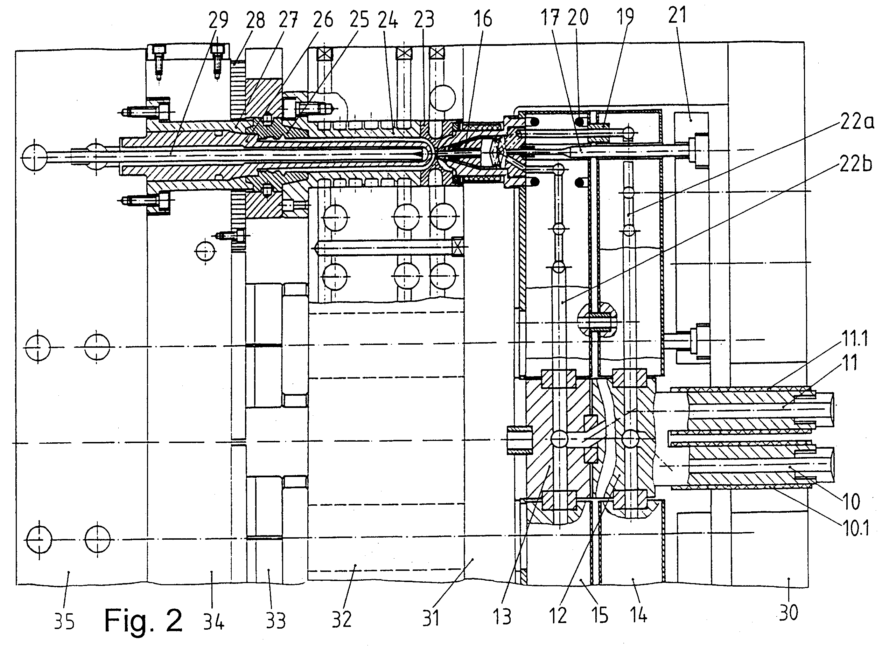

Wie aus Fig. 2 zu ersehen ist, ist die Angußbüchse 10, in die über die Maschinendüse 6 die Komponente A geleitet wird, mit einer Heizeinrichtung 10.1 versehen, während die Angußbüchse 11, in die über die Maschinendüse 7 die Komponente B geleitet wird, mit einer Heizeinrichtung 11.1 versehen ist. An die Angußbüchsen 10 und 11 schließen sich Heizläufer-Zwischenblocks 12 und 13 an, über die die beiden Komponenten A und B in die Blockkörper 14 und 15 gelangen. An die Blockkörper 14 und 15 schließt sich die Spritzgießdüse 16 an. In die Spritzgießdüse 16 greift ein Düsenverschlußkörper 17 ein. Die Blockkörper 14 und 15 sind durch Heißläufer-Zwischenstücke 19 miteinander verbunden. Die Blockkörper 14 und 15 sind thermisch voneinander isoliert und mit gesonderten Heizeinrichtungen 20 versehen. Das der Spritzgießdüse 16 abgewandte Ende des Düsenverschlußkörpers 17 ist in einer Trägerplatte 21 befestigt.

In dem Blockkörper 14 ist ein Schmelzekanal 22a für die Komponente A vorgesehen, während in dem Blockkörper 15 ein Schmelzekanal 22b für die Komponente B vorgesehen ist. Die Verbindung zwischen der Spritzgießdüse 16 und dem Matrizeneinsatz 24 bildet eine Bodenplatte 23. Ein Gewindeschieber 25 umgreift den Kern 26, der von einer Zentrierbüchse 27 umschlossen ist. Ferner sind noch eine Gleitleiste 28 und ein Kernkühlrohr 29 vorgesehen. Die Angußbüchsen 10 und 11 sind in einer Kopfplatte 30 und die Spritzgießdüsen 16 sind in einer Heißläuferplatte 31 gehalten. Den Formbereich der Vorrichtung bildet im wesentlichen eine Matrizenplatte 32. Die Gewindeschieber 25 sind in Schieberleisten 33 gehalten. Den Abschluß des Formbereichs bilden eine Abstreifplatte 34 und eine Kern-Grundplatte 35.

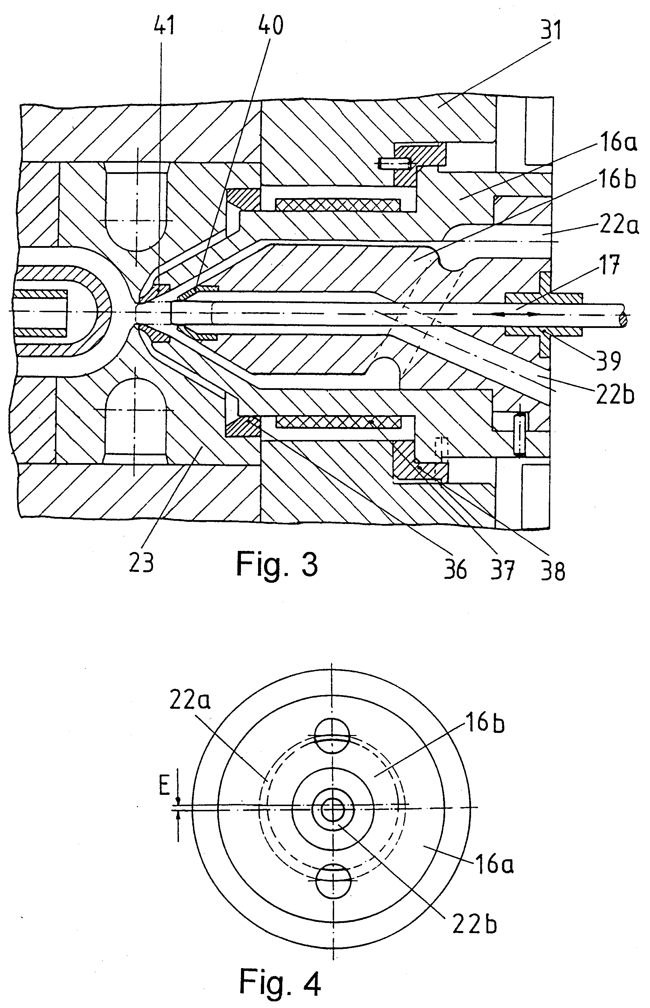

Fig. 3 zeigt eine in die Heißläuferplatte 31 eingesetzte Spritzgießdüse, die aus einem äußeren Düsenkörper 16a und einem inneren Düsenkörper 16b gebildet ist. Hierbei verläuft der Schmelzekanal 22a für die Komponente A ringförmig zwischen dem äußeren Düsenkörper 16a und dem inneren Düsenkörper 16b. Der Schmelzekanal 22b für die Komponente B verläuft zentrisch durch den inneren Düsenkörper 16b. Zwischen der sich an die Heißläuferplatte 31 anschließenden Bodenplatte 23 und dem äußeren Düsenkörper 16a ist ein Zentrierring 36 vorgesehen. Auf der Umfangsfläche des äußeren Düsenkörpers 16a befindet sich ein Heizkörper 37. Unterschiedliche Temperaturen in den Schmelzekanälen 22a und 22b werden dadurch erzielt, daß sich die Heizkörper 37 näher an den Schmelzekanälen 22a als an dem Schmelzekanal 22b befinden. Zwischen der Heißläuferplatte 31 und dem äußeren Düsenkörpers 16a befindet sich ein Stützring 38. Der Düsenverschlußkörper 17 ist in einer Führungsbuchse 39 geführt. Am vorderen Ende des inneren Düsenkörpers 16b ist ein Angußeinsatz 40 und am vorderen Ende des äußeren Düsenkörpers 16a ist ein Angußring 41 angebracht.

Aus Fig. 4 ist zu ersehen, daß die beiden Düsenkörper 16a und 16b exzentrisch zueinander angeordnet sind. Die Querschnittsgröße und die Länge der Schmelzekanäle 22a und 22b sind dabei so bemessen, daß eine gleiche Fließfront erreicht wird.

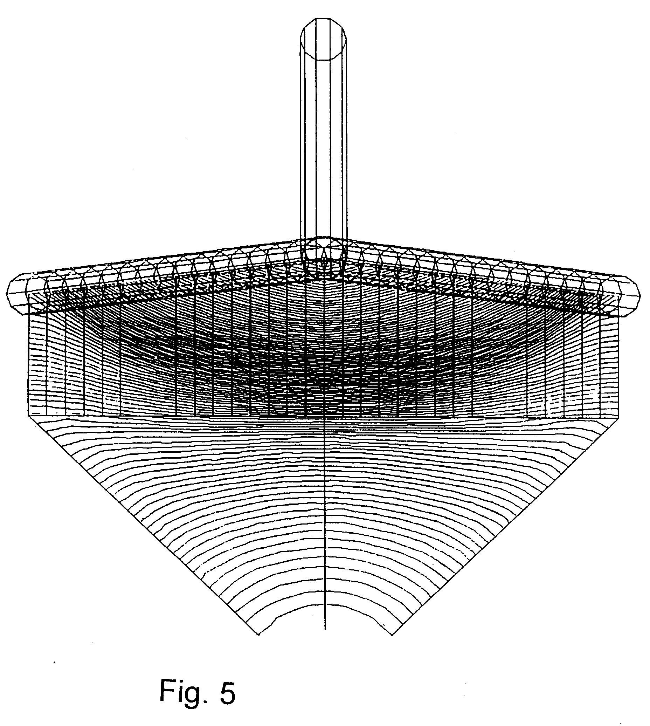

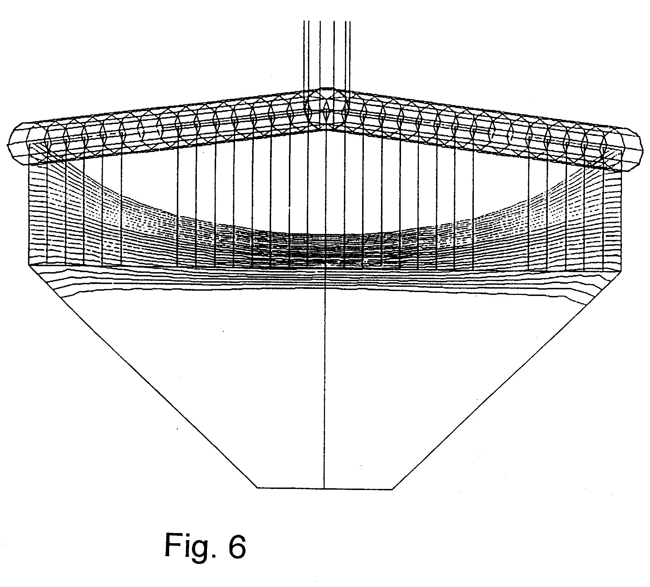

Der gleiche Fließfrontverlauf bei exzentrischer Anordnung der beiden Düsenkörper 16a und 16b zueinander ist aus den Fig. 5 und 6 zu ersehen, wobei Fig. 5 den Verlauf der Fließfront in Isochorendarstellung und Fig. 6 in skalierter Darstellung zeigt. Hierbei beträgt die Exzentrizität E, also die Verschiebung des inneren Düsenkörpers 16b zum äußeren Düsenkörper 16a (vgl. Fig. 3 und 4) etwa 0,6 mm. Die Fig. 5 und 6 zeigen anhand einer Abwicklung des äußeren Schmelzekanals 22a für die Komponente A einen gleichen Fließfrontverlauf am Ende des quasizylindrischen Bereiches des Düsenkörpers.

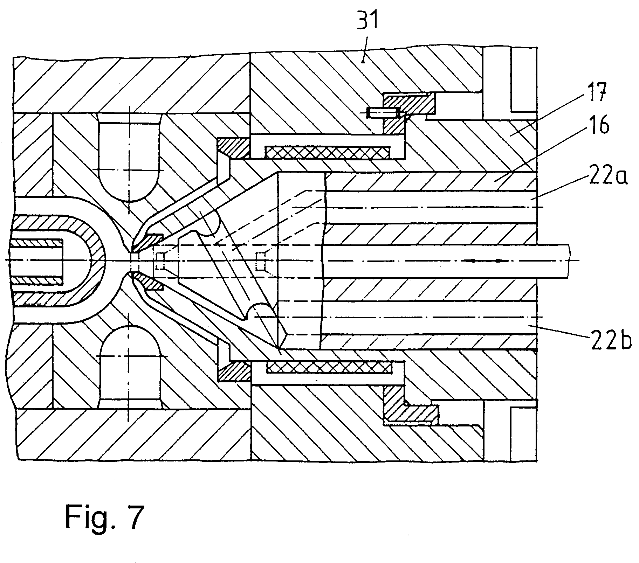

Andere Ausführungsbeispiele der in die Heißläuferplatte 31 eingesetzten Spritzgießdüsen zeigen die Fig. 7 bis 9. Bei diesen Ausführungsbeispielen, bei denen die Heizkörper 37 von den Schmelzekanälen 22a und 22b den gleichen Abstand aufweisen, werden unterschiedliche Temperaturen in den Schmelzekanälen 22a und 22b dadurch erzielt, daß die Wicklungen der Heizkörper 37 im Bereich des Schmelzekanals 22a anders, d. h. enger oder weiter, gewickelt sind als im Bereich des Schmelzekanals 22b.

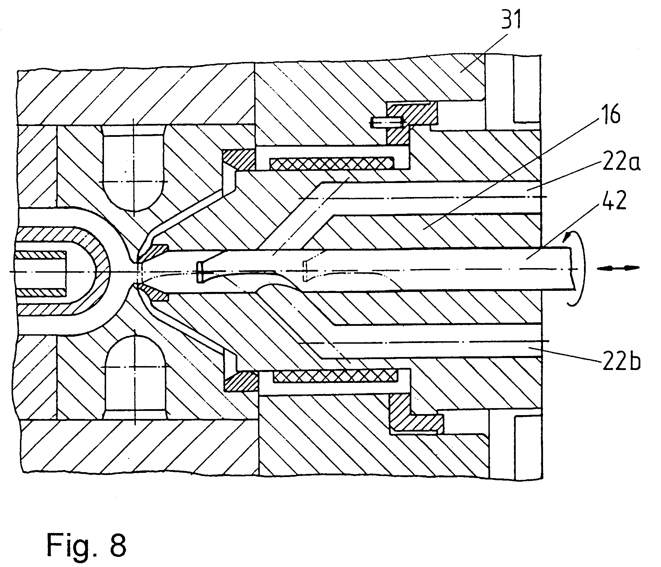

Bei dem Ausführungsbeispiel nach Fig. 8 ist die Spritzgießdüse 16 mit einem als Hub-Dreh-Verschluß 42 ausgebildeten Düsenverschlußkörper versehen. Hierbei erfolgt die Umschaltung von der Komponente A auf die Komponente B durch eine Drehung des Hub-Dreh-Verschlusses 42. Bei Beginn der Einspritzphase ist der Schmelzekanal 22a für die Komponente A geöffnet. Bei Umschaltung auf die Komponente B wird der Schmelzekanal 22a sukzessive geschlossen und der Querschnitt des Schmelzekanals 22b sukzessive um den gleichen Betrag geöffnet, bis der Schmelzekanal 22a völlig geschlossen und der Schmelzekanal 22b - wie dargestellt - völlig geöffnet ist.

Bei der Durchführung des erfindungsgemäßen Verfahrens mit der in Fig. 8 dargestellten Spritzgießdüse 16 ist gewährleistet, daß eine Unterbrechung des Füllvorgangs bei der Umschaltung von der Komponente A auf die Komponente B und umgekehrt nicht auftritt. Der Wert für den Massestrom in der Komponente A und der Komponente B ist identisch. Während der Umschaltzeiten $t_{u1}$ und $t_{u2}$ entspricht die Summe beider Masseströme dem Wert von $\dot{m}_A$ oder $\dot{m}_B$. Bei $t_{u1} = t_{u2} = (\dot{m}_A + \dot{m}_B)$ ist $\dot{m}_A = \dot{m}_B$ des Schmelzeflusses vor oder nach der Umschaltphase.

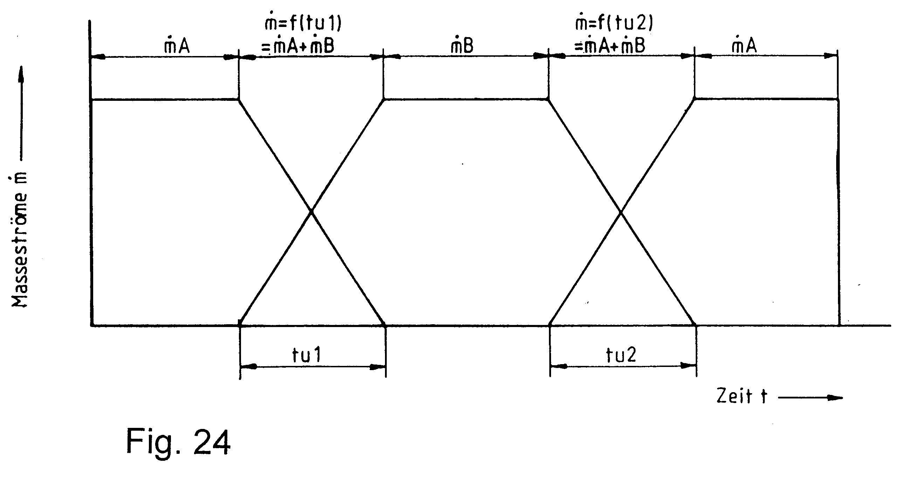

Der Füllvorgang - bei der Annahme, daß der Massestrom in der Schmelze der Komponenten A und B konstant ist - läßt sich anschaulich aus Fig. 24 ersehen. In der Praxis stellt sich während der Umschaltzeiten $t_{u1}$ bzw. $t_{u2}$ ein Massestrom ein, der konstant bleibt, wenn man davon ausgeht, daß der Fließwiderstand "w" in den Düsen beider Komponenten A und B gleich ist:

$$w_A = w_B$$

Unter der Annahme, daß das Fließverhalten der Komponenten A und B sehr ähnlich ist, ergibt sich für den Gesamtfließwiderstand während der Umschaltzeiten $t_{u1}$ bzw. $t_{u2}$:

$$W_{A(tu1)} + W_{B(tu2)} = konst = W_A = W_B$$

Daraus folgt:

$$\dot{m}_{A(tu1)} + \dot{m}_{B(tu2)} = konst = \dot{m}_A = \dot{m}_B$$

Etwaige sich in der Praxis ergebenden Abweichungen vom Sollwert haben keine nennenswerten Auswirkungen.

Die Umschaltzeiten $t_{u1}$ und $t_{u2}$ sind einstellbar, wobei die Schaltgeschwindigkeit des entsprechenden Düsenverschlußkörpers konstant ist.

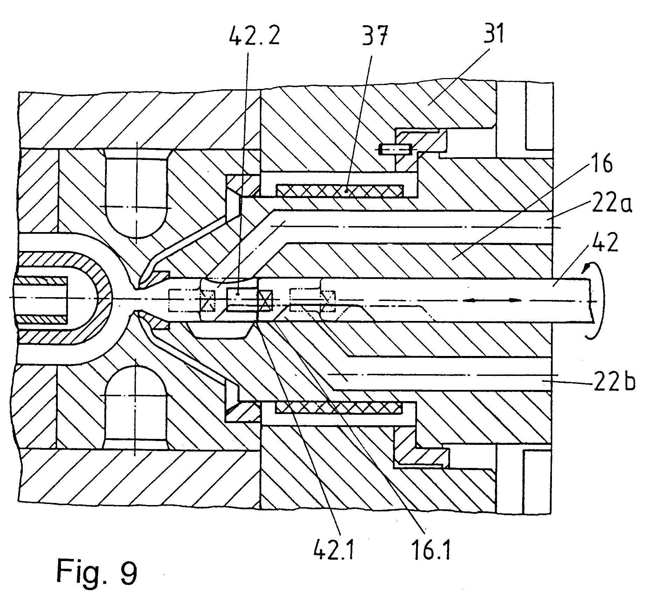

Bei dem Ausführungsbeispiel nach Fig. 9 weist das als Hub-Dreh-Verschluß 42 ausgebildete Verschlußelement in seinem vorderen Bereich eine Steuerkante 42.1 auf, die mit einer weiteren, in der Spritzgießdüse 16 vorgesehenen Steuerkante 16.1 zusammenwirkt. Die Steuerkante 42.1 kann geometrisch so ausgeführt werden, daß die Schmelzeströme der Komponenten A und B degressiv und/oder progressiv in ihren Mengenverhältnissen zueinander regelbar sind. An seinem vorderen Ende ist das Verschlußelement mit einem Verschlußzapfen 42.2 versehen.

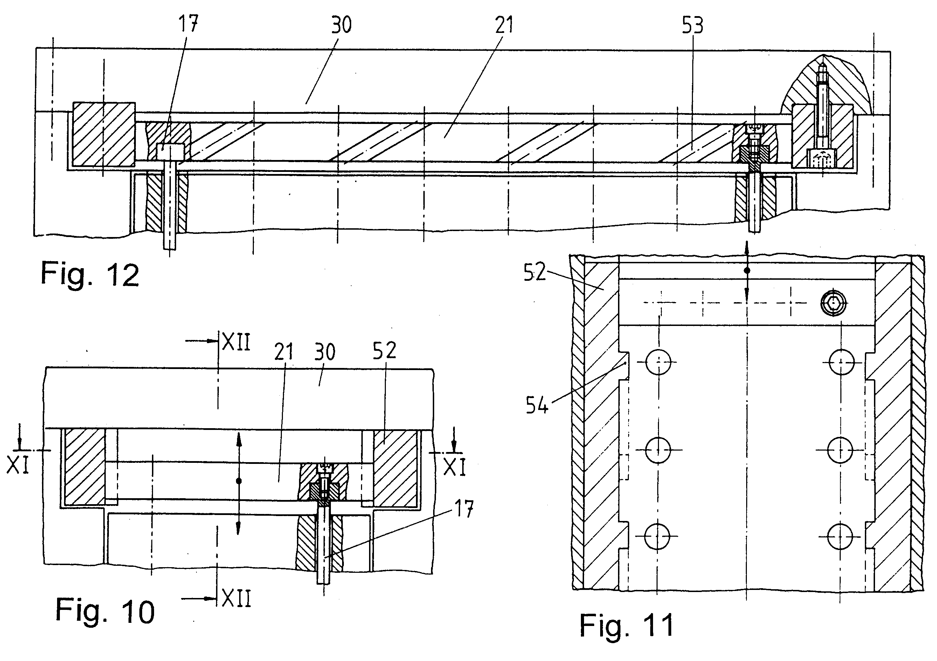

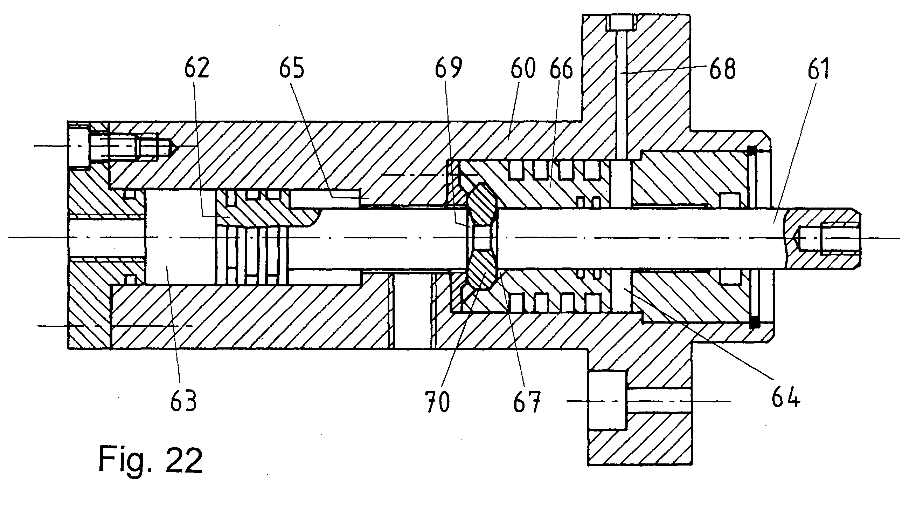

Die Fig. 10 bis 12 zeigen die Kopfplatte 30 und die Trägerplatte 21, mit darin eingesetzten Düsenverschlußkörpern 17. Die Trägerplatte 21 ist mit Lücken 53 einer Schrägverzahnung versehen, in die Zähne 54 eingreifen, die sich an Führungsleisten 52 befinden. Durch Verschieben der Führungsleisten 52 mittels einer hydraulischen Einrichtung (vgl. Fig. 22) werden die Hubbewegungen der Trägerplatte 21 ausgeführt. Da die Düsenverschlußkörper 17 an der Trägerplatte 21 befestigt sind, wird die Bewegung der Trägerplatte 21 auf die Düsenverschlußkörper 17 übertragen, wobei gewährleistet ist, daß alle Düsenverschlußkörper 17 die gleiche Bewegung ausführen.

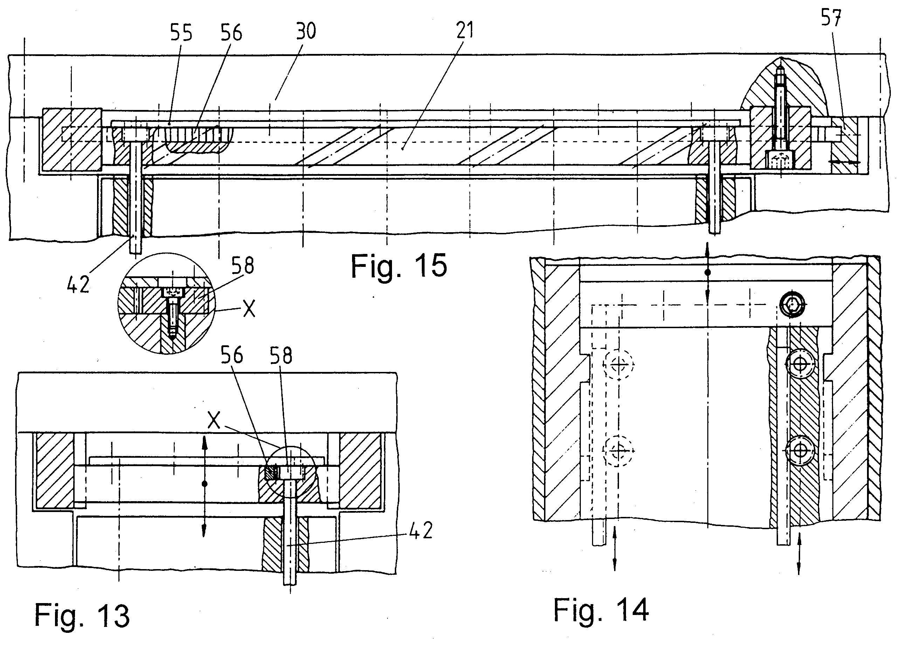

Bei dem in den Fig. 13 bis 15 dargestellten Ausführungsbeispiel sind die Düsenverschlußkörper als Hub-Dreh-Verschluß 42 ausgebildet, d. h. sie müssen sowohl in ihrer Längsrichtung verschoben als auch gleichzeitig oder zu anderen Zeitpunkten gedreht werden. Zu diesem Zweck ist in der Trägerplatte 21 eine durch eine Abschlußplatte 55 gehalten Zahnstange 56 vorgesehen, die über eine Betätigungsleiste 57 mittels einer hydraulischen Einrichtung (vgl. Fig. 22) hin und her bewegt werden kann, und ist jeder Hub-Dreh-Verschluß 42 mit einem Zahnrad 58 versehen, das mit der Zahnstange 56 in Eingriff steht.

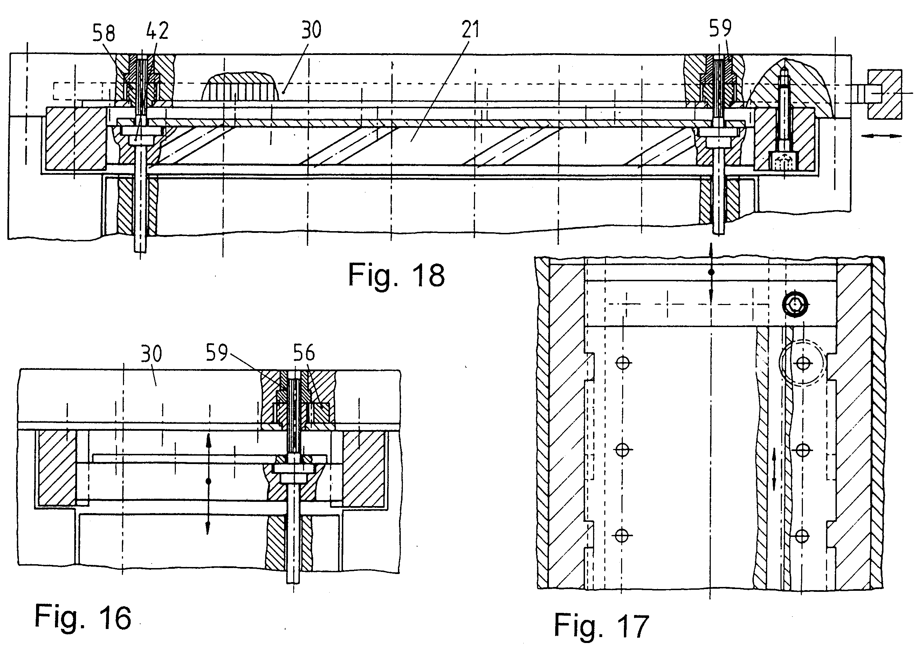

Bei dem in den Fig. 16 bis 18 dargestellten Ausführungsbeispiel sind die - ebenfalls als Hub-Dreh-Verschluß 42 ausgebildeten - Düsenverschlußkörper mit ihrem der Spritzgießdüse abgewandten Ende in einer Führungsbüchse 59 geführt, die in die Kopfplatte 30 eingesetzt ist. Hierbei ist die Zahnstange 56, die mit dem Zahnrad 58 in Eingriff steht, ebenfalls in die Kopfplatte 30 eingesetzt.

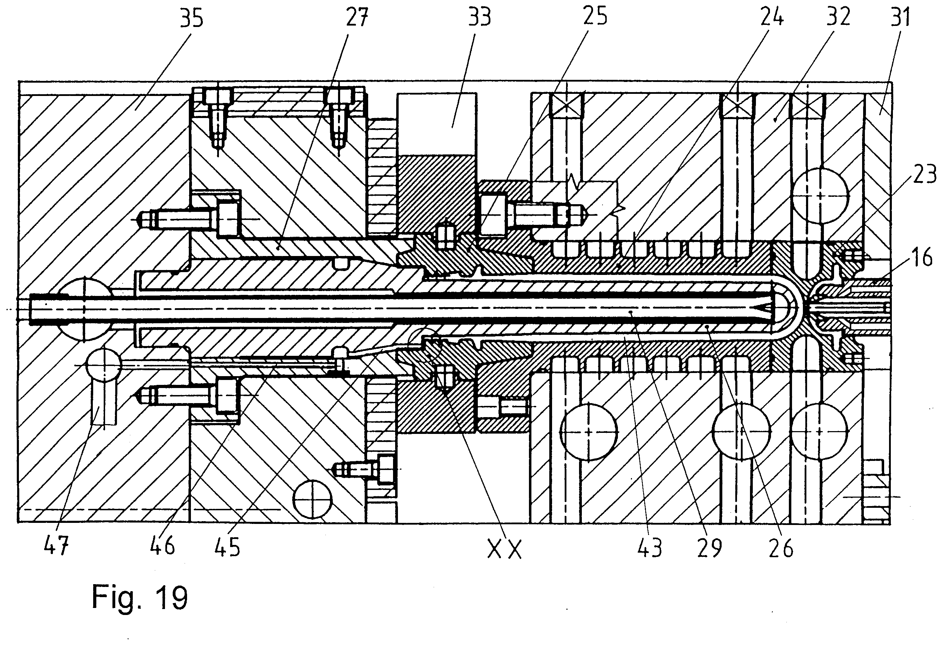

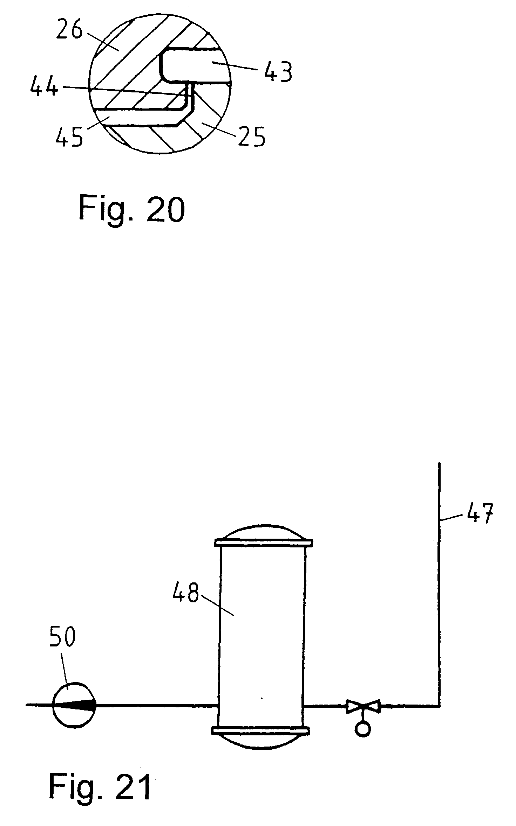

Der Formbereich der erfindungsgemäßen Vorrichtung ist in Fig. 19 dargestellt. Zu erkennen ist das vordere Ende der Spritzgießdüse 16, die in der Bodenplatte 23, die sich an die Heißläuferplatte 31 anschließt, gehalten ist. Der in die Matrizenplatte 32 hineinragende Matrizeneinsatz 24 umschließt den Kern 26 mit dem Kernkühlrohr 29 und den Vorformling 43. An den Matrizeneinsatz 24 schließt sich der Gewindeschieber 25 an, der von der Schieberleiste 33 umfaßt wird. An dem der Spritzgießdüse 16 abgewandten Ende des Vorformlings 43 ist zwischen dem Kern 26 und dem Gewindeschieber 25 ein Entlüftungsschlitz 44 vorgesehen (vgl. Fig. 20), der in einen zwischen dem Kern 26 und der Zentrierbüchse 27 vorgesehenen Entlüftungskanal 45 mündet. Der Entlüftungskanal 45 steht über einen Vakuumkanal 46 mit einer Leitung 47 in Verbindung, die zu einem Speicher 48 führt (vgl. Fig. 21).

Der am Ende des Vorformlings 43 zwischen dem Kern 26 und dem Gewindeschieber 25 vorgesehene Entlüftungsschlitz 44, mit dem sich daran anschließenden Entlüftungskanal 45 ist in Fig. 20 in einem wesentlich größeren Maßstab dargestellt.

Aus Fig. 21 ist zu ersehen, daß die Leitung 47 zu einem Speicher 48 führt, der während des Spritzgießvorgangs mittels einer Vakuumpumpe 50 zumindest weitgehend evakuiert wird. Hierdurch erfolgt die Entlüftung des Formwerkzeugs bzw. der Formkavitäten nach dem Schließen des Formwerkzeugs bzw. der Formkavitäten innerhalb von 0,2 bis 0,3 Sekunden.

Die in Fig. 22 dargestellte hydraulische Einrichtung ist sowohl für die Betätigung der Verschlußelemente der sie aufnehmenden Bauteile einer Vorrichtung nach der Erfindung (vgl. Fig. 13 bis 15), aber auch für beliebige andere Zwecke verwendbar. Sie weist einen Zylinder 60, eine Kolbenstange 61 und einen mit der Kolbenstange 61 verbundenen Kolben 62 auf, der beiderseits mit Druck beaufschlagbar ist. Der Zylinder 60 weist neben dem Innenraum 63 einen weiteren Innenraum 64 auf. Die Kolbenstange 61 ist durch die Trennwand 65 zwischen den beiden Innenräumen 63 und 64 des Zylinders 60 hindurchgeführt. In dem weiteren Innenraum 64 ist ein zweiter Kolben 66 verschiebbar auf der Kolbenstange 61 angeordnet, der auf seiner der Trennwand 65 zwischen den beiden Innenräumen 63 und 64 des Zylinders 60 zugewandten, mit Druck beaufschlagbaren Seite mit einer Ausdrehung 67 versehen ist, während dessen andere Seite unter dem Druck eines fluiden Druckmittels steht, das über eine Leitung 68 zugeführt wird. Als fluides Druckmittel können ein permanenter Luftdruck oder auch Öl mit niedrigem Steuerdruck verwendet werden. Anstelle des fluiden Druckmitels können für die Druckbeaufschlagung der betreffenden Seite des Kolbens 66 auch mechanische Einrichtungen vorgesehen sein, beispielsweise die für diesen Zweck bereits bekannten Federn. Die Kolbenstange 61 ist mit einer Ringnut 69 versehen, die einen trapezförmigen Querschnitt aufweist. Zwischen der Trennwand 65 des Zylinders 60 und dem weiteren Kolben 66 ist ein aus Segmenten gebildeter Ring 70 vorgesehen, dessen innerer Durchmesser dem Durchmesser an der Grundfläche der Ringnut 69 in der Kolbenstange 61 entspricht und dessen äußerer Durchmesser so bemessen ist, daß der weitere Kolben 66 mit der Innenfläche seiner Ausdrehung 67 darüber hinweggleiten kann. Der Querschnitt der Segmente ist symmetrisch und die Kontur an der inneren Begrenzungsfläche des aus den Segmenten gebildeten Ringes 70 ist dem trapezförmigen Querschnitt der Ringnut 69 in der Kolbenstange 61 angepaßt.

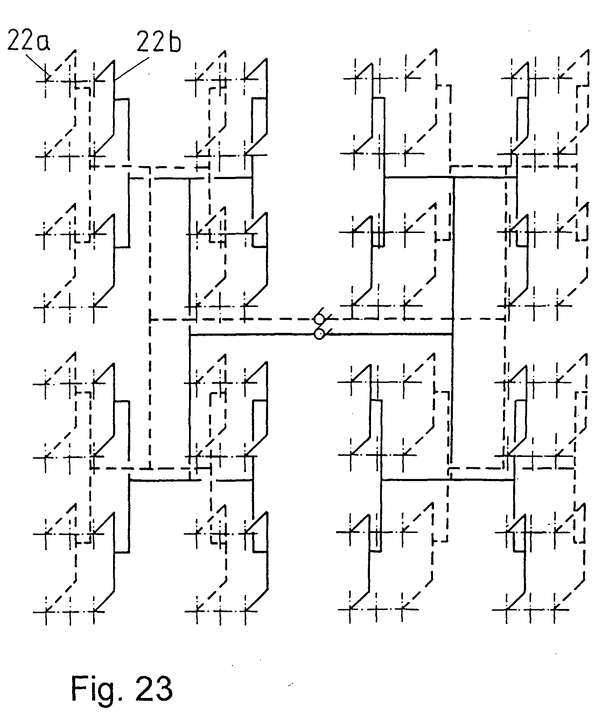

Der in Fig. 23 schematisch dargestellte Verlauf der Schmelzekanäle 22a und 22b bei einem Werkzeug mit zweiunddreißg Formkavitäten zeigt, daß jeder der beiden Schmelzekanäle 22a und 22b die gleiche Länge aufweist.

Fig. 24 zeigt eine grafische Darstellung der Masseströme über der Zeit bei der Durchführung des erfindungsgemäßen Verfahrens mit der in Fig. 8 dargestellten Spritzgießdüse 16.

**Bezugszeichen**

| | |
|---|---|
| 1 | Plastifiziereinheit (für Komponente A) |
| 2 | Plastifiziereinheit (für Komponente B) |
| 3 | Zwischenkörper |
| 4 | Sperrbolzen |
| 5 | Schmelzeführungstraverse |
| 6 | Maschinendüse (für Komponente A) |
| 7 | Maschinendüse (für Komponente B) |
| 8 | Nachdruckbaustein |
| 9 | Schmelzefilter |
| 10 | Angußbüchse (für Komponente A) |
| 10.1 | Heizeinrichtung an (10) |
| 11 | Angußbüchse (für Komponente B) |
| 11.1 | Heizeinrichtung (an 11) |
| 12 | Heißläufer-Zwischenblock (für Komponente A) |
| 13 | Heißläufer-Zwischenblock (für Komponente B) |
| 14 | Blockkörper (für Komponente A) |
| 15 | Blockkörper (für Komponente B) |
| 16 | Spritzgießdüse |
| 16a | äußerer Düsenkörper |
| 16b | innerer Düsenkörper |
| 16.1 | Steuerkante (an 16) |
| 17 | Düsenverschlußkörper |
| 19 | Heißläufer-Zwischenstück |
| 20 | Heizeinrichtungen |
| 21 | Trägerplatte (für 17) |
| 22a | Schmelzekanal (für Komponente A) |
| 22b | Schmelzekanal (für Komponente B) |
| 23 | Bodenplatte |
| 24 | Matrizeneinsatz |
| 25 | Gewindeschieber |
| 26 | Kern |
| 27 | Zentrierbüchse |
| 28 | Gleitleiste |
| 29 | Kernkühlrohr |
| 30 | Kopfplatte |
| 31 | Heißläuferplatte |
| 32 | Matrizenplatte |
| 33 | Schieberleisten |
| 34 | Abstreifplatte |
| 35 | Kern-Grundplatte |
| 36 | Zentrierring |
| 37 | Heizkörper |
| 38 | Stützring |
| 39 | Führungsbuchse |
| 40 | Angußeinsatz |
| 41 | Angußring |
| 42 | Hub-Dreh-Verschluß |
| 42.1 | Steuerkante (an 42) |
| 42.2 | Verschlußzapfen (an 42) |
| 43 | Vorformling |
| 44 | Entlüftungsschlitz |

| 45 | Entlüftungskanal |
| 46 | Vakuumkanal |
| 47 | Leitung |
| 48 | Speicher |
| 49 | weitere Leitung |
| 50 | Vakuumpumpe |
| 52 | Führungsleiste |
| 53 | Lücke der Schrägverzahnung |
| 54 | Zahn der Schrägverzahnung |
| 55 | Abschlußplatte (für 17) |
| 56 | Zahnstange |
| 57 | Betätigungsleiste (für 56) |
| 58 | Zahnrad (an 42) |
| 59 | Führungsbuchse |
| 60 | Zylinder |
| 61 | Kolbenstange |
| 62 | Kolben |
| 63 | Innenraum (in 60) |
| 64 | Innenraum (in 60) |
| 65 | Trennwand (in 60) |
| 66 | weiterer Kolben |
| 67 | Ausdrehung |
| 68 | Leitung |
| 69 | Ringnut |
| 70 | Ring |

**Patentansprüche**

1. Verfahren zum Spritzgießen von dreischichtigen Spritzlingen, insbesondere von Flaschenvorformlingen mit einer inneren und einer äußeren Schicht aus PET (Polyethylenterephthalat) und einer mittleren Schicht aus PET-Rezyklat, mittels eines Formwerkzeugs mit mehreren Formkavitäten
**dadurch gekennzeichnet,**

   1.1 daß die Zuführung der Werkstoffe für die Bildung der inneren und der äußeren Schicht (Komponente A) einerseits und für die Bildung der mittleren Schicht (Komponente B) andererseits durch separat beheizbare Schmelzekanäle erfolgt, deren Temperatur unabhängig voneinander regelbar ist,
   1.2 daß der Schmelzefluß der beiden Komponeneten A und B jeweils über gleichlange Wege geführt wird
   1.3 und daß der Schmelzefluß der beiden Komponenten A und B in den Spritzgießdüsen derart geführt wird, daß sich ein gleicher Fießfrontverlauf ergibt.

2. Verfahren nach Anspruch 1, dadurch gekennzeichnet, daß die Schmelzekanäle für die Zuführung der Werkstoffe für die Bildung der einzelnen Schichten ab der jeweiligen Plastifiziereinheit bis zum Kavitätenanschnitt separat beheizt und hinsichtlich der Temperatur unabhängig voneinander regelbar sind.

3. Verfahren nach Anspruch 1 oder 2, dadurch gekennzeichnet, daß die Schmelzeströme in den Schmelzekanälen durch entsprechende Verschlußelemente in Zeit und Menge regelbar sind.

4. Verfahren nach Anspruch 1, 2 oder 3, dadurch gekennzeichnet, daß nach dem Schließen des Formwerkzeugs bzw. der Formkavitäten mittels eines durch eine Vakuumpumpe zumindest weitgehend evakuierten Speichers eine Entlüftung des Formwerkzeugs bzw. der Formkavitäten durchgeführt wird.

5. Vorrichtung zur Durchführung des Verfahrens nach einem der Ansprüche 1 bis 4, die zwei Plastifiziereinheiten, eine Schmelzezuführungstraverse, einen Heißläuferblock, einen Heißläufer-Düsenkörper und einen Matritzeneinsatz aufweist,
**dadurch gekennzeichnet,**
daß der Heißläuferblock durch thermisch voneinander isolierte und mit gesonderten Heizeinrichtungen (20) versehene Blockkörper (14, 15) gebildet ist, wobei in jedem Blockkörper (14, 15) jeweils ein Schmelzekanal (22a, 22b) für eine der beiden Komponenten A bzw. B vorgesehen ist.

6. Vorrichtung nach Anspruch 5, dadurch gekennzeichnet, daß die beiden Blockkörper (14, 15) mit in Wärmeleitzement eingebetteten Heizeinrichtungen (20), beispielsweise Heizschlangen, und mit Thermofühlern versehen und mit Abstand voneinander angeordnet sind.

7. Vorrichtung nach Anspruch 6, dadurch gekennzeichnet, daß im Durchführungsbereich der Komponente A vom Blockkörper (14) durch den Blockkörper (15) Heißläufer-Zwischenstücke (19) angeordnet sind, die aus einem Werkstoff niedriger Wärmeleitfähigkeit, beispielsweise Titan, gebildet sind.

8. Vorrichtung nach Anspruch 5, 6 oder 7, dadurch gekennzeichnet, daß zwischen den Maschinendüsen (6, 7) der Schmelzezuführungstraverse (5) und den Blockkörpern (14, 15) bzw. den Heißläufer-Zwischenblocks (12, 13) zwei separate Angußbüchsen (10, 11) für die beiden Komponenten A und B vorgesehen sind, die gesonderte Heizeinrichtungen (10.1, 11.1) aufweisen.

9. Vorrichtung nach einem der Ansprüche 5 bis 8, dadurch gekennzeichnet, daß die Spritzgießdüse durch zwei Düsenkörper (16a, 16b) gebildet ist, wobei der Schmelzekanal (22a) für die Komponente A ringförmig zwischen dem äußeren Düsenkörper (16a) und dem inneren Düsenkörper (16b) verläuft, während der Schmelzekanal (22b) für die Komponente B zentrisch durch den inneren Düsenkörper (16b) hindurchgeführt ist, und daß sich auf der äußeren Umfangsfläche des äußeren Düsenkörpers (16b) ein Heizkörper (37) befindet.

10. Vorrichtung nach Anspruch 9, dadurch gekennzeichnet, daß die beiden Düsenkörper (16a, 16b) exzentrisch zueinander angeordnet und die Querschnittsgrößen sowie die Längen der Schmelzekanäle (22a, 22b) so bemessen sind, daß eine gleiche Fließfront erreicht wird.

11. Vorrichtung nach Anspruche 10, dadurch gekennzeichnet, daß die Exzentrizität (E) zwischen den beiden Düsenkörpern (16a, 16b) etwa 0,3 mm bis 1 mm, vorzugsweise 0,6 mm beträgt.

12. Vorrichtung nach Anspruch 9, 10, oder 11, dadurch gekennzeichnet, daß der äußere Düsenkörper (16a) aus einem Werkstoff mit einem Wärmeleitwert von mindestens 130 W/m.K und guten mechanischen Eigenschaften, vorzugsweise aus 99-prozentigem Reinmolybdän, und der innere Düsenkörper (16b) aus einem Werkstoff mit einem Wärmeleitwert von etwa 240 W/m.k, vorzugsweise aus einer Kupferlegierung, gebildet ist.

13. Vorrichtung nach einem der Ansprüche 5 bis 12, dadurch gekennzeichnet, daß die Spritzgießdüse (16) mit einem als Hub-Dreh-Verschluß (42) ausgebildeten Düsenverschlußkörper versehen ist, der in seinem vorderen Bereich eine Steuerkante (42.1) aufweist, die mit einer weiteren, in der Spritzgießdüse (16) vorgesehenen Steuerkante (16.1) zusammenwirkt, und daß der Düsenverschlußkörper an seinem vorderen Ende mit einem zylindrischen Verschlußzapfen (42.2) versehen ist.

14. Vorrichtung nach einem der Ansprüche 5 bis 13, dadurch gekennzeichnet, daß in der Plastifiziereinheit (2) für die Komponente B, zwischen dem Schneckenvorraum und dem Werkzeug, ein Schmelzefilter (9) vorgesehen ist.

15. Vorrichtung nach einem der Ansprüche 5 bis 14, dadurch gekennzeichnet, daß die Düsenverschlußkörper (17) für die Spritzgießdüsen (16) in einer mit einem Hubantrieb versehenen gemeinsamen Trägerplatte (21) angeordnet sind, so daß eine vollkommen synchrone Betätigung der Öffnungs- und Schließvorgänge an allen Kavitäten gewährleistet ist.

16. Vorrichtung nach Anspruch 15, dadurch gekennzeichnet, daß der Hubantrieb der Trägerplatte (21) durch eine hydraulische Einrichtung gebildet ist, die über zwei seitlich angebrachte, mit einer Schrägverzahnung (53, 54) versehene Führungsleisten (52) betätigt wird.

17. Vorrichtung nach Anspruch 15 oder 16, dadurch gekennzeichnet, daß der Düsenverschlußkörper (17) an seinem der Spritzgießdüse (16) abgewandten Ende mit einem Zahnritzel (18) versehen ist, das mit einer Zahnstange (56) in Eingriff steht, die über eine Betätigungsleiste (57) mit einer Hubeinrichtung in Verbindung steht.

18. Vorrichtung nach Anspruch 17, dadurch gekennzeichnet, daß die Zahnstange (56) auf der festen Werkzeugseite in die kalte Kopfplatte (30) integriert ist und daß die Düsenverschlußkörper (17) mit ihrem mit dem Zahnrad (58) versehenen Abschnitt in diese Kopfplatte (30) hineinragen und mit der Zahnstange (56) in Eingriff sind.

19. Vorrichtung nach einem der Ansprüche 5 bis 18, dadurch gekennzeichnet, daß an dem der Spritzgießdüse (16) abgewandten Ende des Vorformlings (43) zwischen dem Kern (26) und dem Gewindeschieber (25) ein Entlüftungsschlitz (44) vorgesehen ist, der in einen zwischen dem Kern (26) und der Zentrierbüchse (27) vorgesehenen Entlüftungskanal (45) mündet, und daß der Entlüftungskanal (45) über einen Vakuumkanal (46) mit einer Leitung (47) in Verbindung steht, die zu einein Speicher (48) führt, der während des Spritzgießvorgangs mittels einer Vakuumpumpe (50) zumindest weitgehend evakuiert worden ist.

20. Hydraulische Einrichtung, die einen Zylinder (60), eine Kolbenstange (61) und einen mit der Kolbenstange (61) verbundenen Kolben (62) aufweist, der beiderseits mit Druck beaufschlagbar ist, insbesondere für die Betätigung der Verschlußelemente bzw. der sie aufnehmenden Bauteile einer Vorrichtung nach einem der Ansprüche 11 bis 19, wobei

- der Zylinder (60) neben dem Innenraum (63) einen weiteren Innenraum (64) aufweist und die Kolbenstange (61) durch die Trennwand (65) zwischen den beiden Innenräumen (63, 64) des Zylinders (60) hindurchgeführt ist,
- in dem weiteren Innenraum (64) ein zweiter Kolben (66) verschiebbar auf der Kolbenstange (61) angeordnet ist, der auf seiner der Trennwand (65) zwischen den beiden Innenräumen (63, 64) des Zylinders (60) zugewandten, mit Druck beaufschlagbaren Seite mit einer Ausdrehung (67) versehen ist, während dessen andere Seite unter einem Gegendruck steht,
- die Kolbenstange (61) mit einer Ringnut (69) versehen ist, die einen trapezförmigen Querschnitt aufweist,
- zwischen der Trennwand (65) des Zylinders (60) und dem weiteren Kolben (66) ein aus Segmenten gebildeter Ring (70) vorgesehen ist, dessen innerer Durchmesser dem Durchmesser an der Grundfläche der Ringnut (69) in der Kolbenstange (61) entspricht und dessen äußerer Durchmesser so bemessen ist, daß der weitere Kolben (66) mit der Innenfläche seiner Ausdrehung (67) darüber hinweggleiten kann,

**dadurch gekennzeichnet, daß**

- der Querschnitt der Segmente symmetrisch und die Kontur an der inneren Begrenzungsfläche des aus den Segmenten gebildeten Ringes (70) dem trapezförmigen Querschnitt der Ringnut (69) in der Kolbenstange (61) angepaßt ist.

21. Hydraulische Einrichtung nach Anspruch 20, dadurch gekennzeichnet, daß die Erzeugung des Gegendrucks auf der dem Zylinders (60) abgewandten Seite des zweiten Kolbens (66) durch ein fluides Druckmittel erzeugt wird, d. h. durch einen permaneten Luftdruck oder durch Öl mit niedrigem Steuerdruck.

Fig. 1

Fig. 2

Fig. 3

Fig. 4

Fig. 5

Fig. 6

Fig. 7

Fig. 8

Fig. 9

Fig. 11

Fig. 12

Fig. 10

Fig. 15

Fig. 13

Fig. 14

EP 0 790 116 A2

Fig. 17

Fig. 18

Fig. 16

Fig. 19

35  27  33  25  24  32  31

23

16

47  46  45  XX  43  29  26

EP 0 790 116 A2

Fig. 20

Fig. 21

Fig. 22

Fig. 23

Fig. 24